Europäisches Patentamt

**European Patent Office**

**Office européen des brevets**

(19)

(11) Publication number: **0 248 192**
**A2**

## EUROPEAN PATENT APPLICATION

(12)

(21) Application number: **87105924.2**

(22) Date of filing: **23.04.87**

(51) Int. Cl.³: **C 09 D 3/48**

(30) Priority: **29.04.86 US 857175**

(43) Date of publication of application:
**09.12.87 Bulletin 87/50**

(84) Designated Contracting States:
**BE DE FR GB NL**

(71) Applicant: **STERLING DRUG INC.**
**90 Park Avenue**
**New York New York(US)**

(72) Inventor: **Clark, Leonard Robin**
**7182 Bluegrass Cove**
**Olive Branch Mississippi(US)**

(72) Inventor: **West, Robert Wayne**
**3775 Tutwiler**
**Memphis Tennessee(US)**

(74) Representative: **Baillie, Iain Cameron et al,**
**c/o Ladas & Parry Isartorplatz 5**
**D-8000 München 2(DE)**

(54) Liquid coating composition.

(57) An oil-in-water-in-oil coating composition comprising (a) an oil continuous phase comprising a solution of an oil soluble resin or drying oil or mixtures thereof in a water immiscible solvent, (b) an aqueous discontinuous phase comprising an emulsion with pH of about 4 to 10 of water insoluble resin in an aqueous medium, and (c) an effective dispersing amount of a dispersing agent for dispersing (b) in (a) consisting essentially of hydrated water-soluble cellulose ether.

This invention relates to liquid coating compositions capable of having a low volatile organic content (VOC) and excellent weathering, wetting, adhesion and stability characteristics. More particularly, this invention relates to an oil-in-water-in-oil coating composition comprising a water-immiscible liquid or solution as a continuous oil phase.

For years coatings have been used to protect or change the appearance of various substrates. Three types of coatings most commonly available are paints, stains and clear coatings. A paint is any pigmented liquid, liquefiable or mastic composition designed for application to a substrate in a thin layer which is converted to an opaque solid film after application. Paints generally contain higher non-volatiles (NV) than stains. A stain is a transparent, semitransparent or opaque solution or suspension of coloring matter (dyes or pigments or both) in a vehicle, designed to color a surface without hiding it, or to color a material into which it is incorporated. Stains are generally lower in viscosity and pigment content than paints and tend to penetrate more into the substrate than paints. Clear coatings are generally colorless or near colorless transparent liquids which form transparent protective and/or decorative films upon application,

CASE: 7416-A

-2-

although they may contain low concentration of colorless pigments.

All coating compositions contain a resinous or resin-forming constituent called the "binder" which can be a liquid such as a drying oil or a resin that can be converted to a solid gel in the final coating. In some instances, where the binder is either a solid or is too viscous to be applied as a fluid film, a volatile solvent or "thinner" is also added. This evaporates after a liquid film is deposited, and the evaporation causes solidification of the film into the desired coating.

Pigments added to coating compositions are insoluble powders of very fine particle size, as small as 0.1 micron and can be up to about 20 microns. The binder together with the pigment and other conventional coating additives make up the nonvolatile (NV) or film-forming part of the liquid coating composition.

Coating compositions may be classified into two very broad groups: (1) aqueous types of solutions or emulsions, which use water as the primary liquid or continuous phase; and (2) non-aqueous types of solutions or suspensions, which use organic solvents, such as hydrocarbons or oxygenated compounds as the primary liquid or continuous phase. Many of the same pigments and other components used in coating compositions can be used in both the aqueous and non-aqueous types of coatings.

The non-aqueous type of coatings generally contain an oil-soluble alkyd resin either alone or in combination with certain other film-forming agents such as drying oils. The non-aqueous coatings are generally made by blending the alkyds and drying oils with colored pigments, extender pigments such as clays and silicates, in a volatile organic solvent. In addition, metallic soaps (driers), such as cobalt, calcium, manganese and the like naphthenates are added to speed the dry time of these coatings. Also added may be such additives as anti-settling compounds, dispersing agents, flatting agents, adhesion promoters, water-proofing agents, mildewcides, and film preservatives, among others.

These non-aqueous coatings are characterized by good wetting penetration and adhesion to the substrate. The long term weathering of these coatings, however, often results in the occurrence of one or more of the following problems: embrittlement, cracking, blistering, fading and chalking. Additionally, these non-aqueous solutions are flammable and present air pollution problems because of the volatile organic compounds used as solvents.

The aqueous type of coatings is characterized by the use of emulsion polymers as the binders for these products. The polymers are made by the emulsion polymerization of such compounds as vinyl acetate, methyl methacrylate, ethyl acrylates, styrene-butadiene, etc. These emulsion polymers may be blended with pigments, extender pigments, and water to make coatings. Also added are such items as freeze-thaw agents, coalescing agents, dispersing agents, mildewcides, thickeners, etc. These aqueous coatings exhibit excellent weathering characteristics because of the high molecular weight associated with the polymers used. Because of the water content, there is less VOC emission than with non-aqueous products. However, since the polymer film forms by coalescing, these aqueous products tend not to penetrate nor bond as well as their non-aqueous counterparts. They are furthermore subject to such phenomena as poor adhesion, a phenomenon known as tissue paper peeling and will raise the grain of wood.

In recent years there have been many attempts to overcome the shortcomings of the above-

-4-

mentioned non-aqueous solution and emulsion type of coatings. One method has been to modify non-aqueous solution resins so that they become water soluble or water dispersable so as to avoid solvent emission and flammability problems and still yield good penetration and bonding to the substrate. Another method has been to emulsify such items as alkyd resins or drying oils into a latex emulsion such as acrylic latex resins, so as to improve bonding to and adhesion to the substrate, yet leave a high molecular weight film on the surface. In both cases, the resultant coatings suffer one or more detriments, such as poor storage stability, slow drying, difficulty in manufacture, and loss of long term weathering. The basic approach in both these systems has been to add, by some means, the resins to the water in such a manner that the water is the continuous phase. It has now been found, however, that the non-aqueous solution and emulsion type of coatings may be modified by the addition of an aqueous latex emulsion into the non-aqueous coating composition so that the non-aqueous phase is continuous and the aqueous latex is dispersed or suspended therein. By using hydrated water-soluble cellulose ether as the dispersing agent, coating compositions can be made that will have the aqueous phase as the discontinuous phase dispersed throughout the non-aqueous continuous phase.

An object of this invention is to produce an oil-in-water-in-oil coating composition having a non-aqueous continuous phase and an aqueous discontinuous phase dispersed therein which contains a emulsified water-insoluble polymer or resin. It is particularly desirable to produce such a coating composition with low VOC, a favorable environmental consideration relating to the use of volatile organic solvents. It is also desirable to produce such a coating composition with good wetting and bonding characteristics

-5-

and which will deposit a high molecular weight film on an applied surface with excellent weathering characteristics, for example, good waterproofing characteristics, particularly a commercially viable, stable paint, stain or clear coating.

## Summary of the Invention

An oil-in-water-in-oil coating composition comprising (a) an oil continuous phase comprising a solution of an oil soluble resin or drying oil or mixtures thereof in a water immiscible solvent, (b) an aqueous discontinuous phase comprising an emulsion of water insoluble resin in an aqueous medium, and (c) an effective dispersing amount of an agent for dispersing (b) in (a) consisting essentially of hydrated water-soluble cellulose ether.

## Detailed Description of the Invention

The subject coating compositions preferably contain the three essential components in the indicated approximate relative percent by weight proportions:

| Component | % w/w |
|---|---|
| Oil continuous phase | 20 - 95.8 |
| Aqueous discontinuous phase | 4 - 70 |
| Hydrated dispersing agent* | 0.2 - 10 |

*Based on active solids

The oil continuous phase in the subject coating compositions comprises a solution of an oil soluble resin or drying oil or mixtures thereof in a water immiscible solvent. As the oil soluble resin, an alkyd or modified alkyd resin is preferred although other thermosetting resins such as, for example, epoxy ester resins, polyurethane resins and the like, may be utilized.

Alkyd resins are thermosetting hydroxycarboxylic resins prepared by the condensation of a polybasic acid or anhydride with a polyhydric alcohol. The most common polybasic acid used is phthalic anhydride, although other acids used in the preparation of alkyd resins include sebasic acid, maleic acid, azelaic acid, adipic acid and succinic acid. Other acids which may be substituted on a molar basis are fumaric acid and isophthalic acid. The most common polyhydric alcohol used is glycerol. Other suitable polyhydric alcohols are, for example, ethylene glycol and trimethylolpropane (2,2,-dihydroxymethyl-1-butanol).

For commercial applications, the alkyd resin is preferably modified by a monobasic acid of which the vegetable oil fatty acids are typical. This modification produces desirable qualities in the resin particularly when it is used as a film forming constituent in a coating composition. The monobasic acid is preferably admixed during the formation of the resin. Examples of suitable modifying acids of this type are, but not limited to, linseed fatty acids, soya fatty acids, coconut fatty acids, conjugated linseed fatty acids, pelargonic acid, castor oil fatty acids and dehydrated castor oil fatty acids. Additionally, triglyceride oils such as, for example, tung oil, linseed oil, soy bean oil and the like, may be used to derive the foregoing fatty acids in situ as well as part of the polyhydric alcohol, glycerol, by the transesterification of the triglyceride oil with additional polyhydric alcohol during the preparation of the resins.

The quantities of these ingredients in the alkyd resin will vary over a wide range according to the characteristics of the particular constituents being used and may readily be determined in each case by one skilled in the art. Generally the polybasic acid content of the alkyd resin may range from 15 to 45%; the monobasic acid content may range from 15 to 55%; with the polybasic alcohol being the remainder.

Alkyds may be additionally modified by combining them with various glycols. Examples of glycols commonly used are pentaerythritol diethylene glycol. More drastic changes in alkyd properties can be produced by crosslinking them by the addition of isocyanates such as toluene di-isocyanate. The latter alkyds are commonly called urethane modified alkyds. Urethane modified alkyds dry to much harder finishes than alkyds not so modified. Other examples of modified alkyds include modification by reacting them with natural resins such as rosin, or with other synthetic resins such as phenolics, amino resins, silicone resins and the like or by reacting them with imides, styrene, and the like.

The final molecular weight or the degree of polymerization of the alkyds is controlled by adding controlled amounts of an excess of one of the reactants - fatty acids or glycols. Consequently the finished alkyds generally contain small amounts of unreacted hydroxyl, or acid groups, or both. Alkyds produced by using relatively low ratios of snythetic polybasic acid to fatty acid are called long oil alkyds, those produced with very high ratios are called short oil alkyds, and those produced with intermediate ratios are called medium oil alkyds.

These alkyd and modified alkyd resins are well known in the paint, stain and coating industry and are commercially available from a number of different manufacturers, as are other oil soluble resins, for example, epoxy ester resins, polyurethane resins and the like. The present invention is not limited to the type of oil soluble resin.

Any drying oil that dries to a hard film may be used. Typical such oils utilized in coating compositions include linseed oil (preferred), oiticica oil, tung oil and perilla oil. One or more of such drying oils may be used.

In general, the oil phase is prepared by blending the resin or drying oil into the water immiscible solvent. With the resin alone, from about 10 to about 90 percent by weight is preferably dissolved in the solvent. With the drying oil alone, from about 10 to about 50 percent by weight is preferred. With mixtures of resin and drying oil, from about 10 to about 95 percent by weight, wherein the ratio of drying oil to resin should not exceed about 3:1, is preferred. Conventional coating additives such as, for example, colored and extender pigments, driers waterproofing agents, etc., may optionally be added, generally from about 0.1 (without pigments) to about 60 (with pigments) percent by weight.

The water immiscible solvent, or oil phase, in which the alkyd resin and/or drying oil are blended to form the oil continuous phase of the subject compositions is an organic solvent; examples of such include a petroleum distillate such as, for example, mineral spirits, VMP naphtha, kerosene, mineral oil and the like; a terpenic solvent such as, for example, turpentine, pine oil and the like; or some combination thereof.

The discontinuous phase in the subject coating compositions comprises an oil-in-water emulsion, or "latex", of dispersed water insoluble, organic film-forming, polymeric resins in an aqueous phase, with a pH range of about 4-10. Typical such resins include acrylic polymers or copolymers, vinyl homo-polymers or copolymers and styrene-butadiene. Preferred herein are the acrylic resins, including homopolymers and copolymers of alkyl (1-8 carbons) acrylates and methacrylates and copolymers of such monomers with acrylonitrile, styrene and similar vinyl monomers. As the aqueous phase of the latex, water itself may be the suspending medium or water containing various amounts of water soluble or water miscible organic liquids generally used in coating compositions. These liquids include the various mono and polyhydric alcohols, such as the alkylene glycols, the glycol ethers, the ether alcohols, the ketones, and particularly the lower alcohols and glycols such as ethyl alcohol, propyl alcohol, ethylene glycol, propylene glycol and the like.

The polymeric resin, or "binder", is present in the latex in the form of very fine particles, generally with an average partical size ranging between 0.01 micron up to about 3.0 microns and preferably between 0.1 and 1.0 micron. Commercial latex products such as aqueous latex paints may contain various conventional additives in addition to the polymeric resin binder such as pigments, pH control agents, mildewcides, etc. Also included are emulsifying agents or surfactants to help wet and disperse the polymeric and pigment particles, to emulsify liquids and to function as defoamers. For purposes of this invention, anionic and nonionic types of surfactants are suitable but not the cationics.

In general, the aqueous discontinuous phase is prepared by dispersing the polymeric resin in the aqueous phase together with other suitable conventional coating and stabilizing ingredients optionally added. Usually, the aqueous dispersion comprises from about 2 to about 65, preferably 5-15, percent by weight of the polymeric resin binder. Other common additives which may be optionally added such as pigments, surfactants, defoamers, etc., generally make up from about 0.5 to about 20 percent. by weight of the total latex composition.

The composition of the polymeric resin binder is not particularly critical and, although acrylics are preferred, various other polymers and copolymers may be used, including a natural rubber, a styrene resin, a styrene-butadiene resin, a vinyl resin (e.g. derived from a vinyl alkanoates such as

-10-

acetate, propionate and the like) and combinations thereof. In general, the polymeric resin binders are well known in the art and commercially available.

Typical commercial latexes of water insoluble resins that may be utilized in preparation of the discontinuous phase of the subject coating compositions are those marketed by the Union Oil Company, Chemicals Division, Schaumburg, IL, under its "Amsco" trademark with various RES-numerical designations such as, for example, the styrene butadiene type RES 4104 (pH 9.0); the vinyl acrylic type RES 682 (pH 4.5); the acrylic type RES 745 (pH 7.5); the styrene acrylic type RES 210 (pH 7.5); and the polyvinyl acetate type RES 3001P (pH 4.5). Other suitable latexes are available from different manufacturers, for example, the water dispersable urethane types marketed by the Spencer-Kellog Division of Textron, Inc., Buffalo, N.Y., under its "Spensol" trademark, e.g. L-44 and L-51; the ethylenevinyl chloride type marketed by Air Products & Chemicals, Inc., Allentown, PA, under its "Airflex" trademark, e.g. 4514 and 4530; and the acrylic types marketed by the Rohm & Haas Company, Inc., Philadelphia, PA, under its "Rhoplex" trademark, e.g. AC-33, AC-64, AC-630 and AC-829.

The dispersing agent in the subject coating compositions for dispersing the aqueous discontinuous phase in the oil continuous phase is hydrated watersoluble cellulose ether.

Cellulose ethers are a well recognized class of polymeric cellulose derivatives, abundantly reviewed in the literature; for example, see Kirk-Othmer's "Encyclopedia of Chemical Technology", 3rd Ed., Vol. 5, 1979, publ. by John Wiley & Sons, New York, N.Y., in the chapter entitled "Cellulose Derivatives, Ethers", pages 143-163.

Cellulose ethers, which are derived from and

-11-

have the polymeric backbone of cellulose, a natural carbohydrate containing a basic repeating structure of anhydroglucose units, can be subdivided into two groups: water-soluble and organic-soluble. For purposes of this invention, only the water-soluble group of cellulose ethers have been found suitable as dispersing agents in the subject compositions.

Water-soluble cellulose ethers are generally prepared commercially from either chemical grade cotton linter or wood pulp cellulose by treatment with caustic solution to produce alkali cellulose which is then treated with methyl chloride or an alkylene oxide such as, for example, ethylene oxide, propylene oxide and butylene oxide, or with combinations of these or other art-recognized ether forming compounds.

Water-soluble cellulose ethers suitable as dispersing agents in the subject compositions are anionic or nonionic and include, for example, sodium carboxymethyl cellulose, sodium carboxymethyl 2-hydroxyethyl cellulose, 2-hydroxyethyl cellulose, methyl cellulose, 2-hydroxypropyl methyl cellulose, 2-hydroxyethyl methyl cellulose, 2-hydroxybutyl methyl cellulose, 2-hydroxyethyl ethyl cellulose and 2-hydroxypropyl cellulose. Among the preferred cellulose ethers are methyl cellulose, 2-hydroxypropyl methyl cellulose and 2-hydroxypropyl cellulose.

In addition to their water solubility feature, the instant cellulose ethers are also characterized by a preferred viscosity of a standard solution (2% by weight in water at 20°C.) being equal to about 1000 centipoise units or less. Viscosity measurements are suitably taken on conventional viscometers such as, for example, a Brookfield RV Viscometer using a number 2 spindle at 20 revolutions per minute.

It is essential to the coating compositions of this invention that the cellulose ether component

-12-

be hydratable in aqueous media. In hydrating the cellulose ether component, an amount of water is utilized which, at a minimum, is sufficient to effectively form a hydrated gel, although excess water may be advantageously employed. Generally, from about 40 to about 95 weight percent, and preferably from about 60 to about 90 weight percent, of water is used based on the total weight of the two ingredients; the dry weight of the cellulose ether component being the "active solids". A mixture of water and a low molecular weight polyhydric alcohol, for example, glycerol or an alkylene glycol such as ethylene glycol, propylene glycol and the like, preferably in about a 1:1 ratio, may also be used to hydrate the cellulose ether component. The lower the average molecular weight and, consequently, the lower the viscosity of the resulting solution of the cellulose ether component, the less water or water-polyhydric alcohol solvent is needed.

The water-soluble cellulose ethers are readily available from diverse commercial entities, for example, from Dow Chemical Company, Midland, Michigan under its "Methocel" trademark, including methyl cellulose (Methocel A), hydroxypropyl methyl cellulose (Methocel E, F, J and K) and hydroxybutyl methyl cellulose (Methocel HB); and from Hercules Inc., Wilmington, Delaware under its "Klucel" trademark, including hydroxypropyl cellulose (Klucel G).

A particularly suitable hydrated cellulose ether solution for use in the compositions of this invention is obtainable from about 10% by weight Klucel G in about 85% by weight water and about 5% by weight propylene glycol.

The coating compositions of this invention are readily prepared by using art-recognized principles and methodologies in mixing the ingredients together and in choosing the type of mixing or dispersing equipment to be used. Example 2 provides a general listing of components, both essential and optional, in the order in which they can be advantageously mixed and illustrates a procedure for making the subject compositions. The hydrated cellulose ether component is first dispersed, for example, by mechanical dispersing means, into the solution of oil soluble resin and/or drying oil (oil phase) to obtain a homogeneous dispersion of the hydrated cellulose ether therein. To this dispersion, is then added the aqueous emulsion of water insoluble resin with thorough blending to achieve the final product. It is essential that the cellulose ether component be hydrated before incorporation into the oil phase. Failure to hydrate results in a final product which has the aqueous phase rather than the oil phase as the continuous phase.

Other conventional coating additives, if appropriate, may obviously be utilized and incorporated into either the oil soluble resin solution or the water insoluble resin emulsion or both as best suited based on solubility, dispersibility, etc. considerations. Such additives include but are not limited to colored pigments, extender pigments, fillers, driers, waterproofing agents, anti-skinning agents, volatile organic thinners, preservatives, mildewcides, U.V. absorbing agents, pH regulators, surfactants and the like.

The subject coating compositions have beneficial commercial and industrial applications, particularly in the area of paints, stains and clear coating compositions as illustrated in the Examples. The hydrated cellulose ether component facilitates incorporation of a relatively substantial amount of a water based emulsion of insoluble resin, such as an acrylic latex, PVA emulsion, etc., into a oil phase, such as an oil based paint, stain, etc. The resultant

-14-

product, which is a multiphase emulsion of the oil-water-in-oil type, provides the best of both techniques, that is, excellent penetration and bonding in a substrate such as wood, for example, and a highly durable weather resistant film surface as the water phase evaporates. Because of this relatively high water content and relatively low VOC content, the subject coating compositions can be formulated to meet or substantially comply with environmental standards. For example, coating compositions are obtainable with a VOC content of not more than 250 grams per liter for paints and not more than 350 grams per liter for opaque stains in accordance with Rule 107 of the South Coast Air Quality Management District (SCAQMD) of California. This low VOC aspect provides the subject coating compositions with a substantial benefit over presently available coating compositions.

## EXAMPLE 1

### Hydroxypropyl Cellulose

In this example, a hydrated cellulose ether is prepared by hydrating a commercially available 2-hydroxypropyl cellulose (Klucel G) with water and a polyhydric alcohol. One hundred grams of Klucel G are mixed with 850 grams of water and 50 grams of propylene glycol at 90-100°C. The mixture is stirred and allowed to cool to ambient temperature. Upon cooling a viscous solution of hydrated hydroxypropyl cellulose is obtained.

## EXAMPLE 2

### Waterproofing Stain

The hydrated cellulose ether obtained in Example 1 is incorporated into the following formulation to provide a water-proofing stain.

| Ingredient | % | grams |
|---|---|---|
| 1. Cellulose ether solution (Ex.1) | 10.0 | 40.0 |
| 2. Medium oil alkyd resin (55%NV) | 5.0 | 20.0 |
| 3. Extender pigment[a] | 6.5 | 26.0 |
| 4. Red iron oxide pigment | 5.0 | 20.0 |
| 5. Linseed oil | 5.0 | 20.0 |

-15-

<u>EXAMPLE 2 (con't)</u>

| | | | |
|---|---|---|---|
| 6. | Micronized wax[b] | 2.0 | 8.0 |
| 7. | Paraffin wax (crude) | 1.5 | 6.0 |
| 8. | Mineral spirits | 12.5 | 50.0 |
| 9. | Cobalt naphthenate 12% drier | 0.15 | 0.6 |
| 10. | Calcium naphthenate 8% drier | 0.15 | 0.6 |
| 11. | Cobalt naphthenate 21% drier | 0.05 | 0.2 |
| 12. | Anti-skinning agent[c] | 0.25 | 1.0 |
| 13. | Deionized water | 41.7 | 166.8 |
| 14. | Acrylic resin emulsion[d] (65% NV) | 10.0 | 40.0 |
| 15. | Bacteriostatic preservative[e] | 0.2 | 0.8 |
| | | 100.0 | 400.0 |

a.  Sodium potassium aluminum silicate

b.  Finely ground straight chain hydrocarbon wax, average particle size of 3 microns, m.p.: 100-106°C., commercially available from Micro-Powders Inc., Yonkers, N.Y.

c.  Methyl ethyl ketoxime.

d.  An acrylic latex oil-in-water emulsion (about 35% water) commercially available from Union Oil, Union Chemicals Division, Schaumburg, IL under its trademark: AMSCO RES 6510.

e.  "Nuosept 95", trademark of Tenneco Chemicals, Piscataway, N.Y.

Ingredients (1) through (4) are added to a mixing vessel and ground under high shear in a high speed disc disperser (2 inch diameter disc; 1000-1200 r.p.m.) for 5-10 minutes in order to disperse the pigments and hydrated cellulose ether component into the resin solution; average size of pigments less than 40 microns. The linseed oil (5) and the micronized wax (6) are then blended into the dispersion. The paraffin wax (7) is dissolved in the mineral spirits (8) to which the driers (9) through (11) and the anti-skinning agent (12) are added and mixed. The latter mixture of ingredients (7) through (12) are combined with the dispersion of ingredients (1) through (6) in the mixing vessel and the temperature of the vessel brought to 30-40°C. The water (13), acrylic resin emulsion (14) and preservative (15) are blended together and slowly added over 1-2 minutes to the mixing vessel using moderate mixing speed (about 500-

-16-

700 rpm) with additional stirring for 3-5 minutes. The resultant waterproofing stain exhibits excellent stability and, when applied to a wood surface, the resultant coating exhibits excellent waterproofing, durability and fade-resistant characteristics.

## EXAMPLE 3

### Hydroxypropyl Methyl Cellulose

In this example a hydrated cellulose ether is prepared by hydrating a commercially available 2-hydroxypropyl methyl cellulose (Methocel E4M) with water and a polyhydric alcohol. One hundred grams of Methocel E4M are mixed with 850 grams of water and 50 grams of propylene glycol at 90-100°C. This mixture is stirred and allowed to cool to ambient temperature. Upon cooling a viscous solution of hydrated hydroxypropyl methyl cellulose is obtained.

## EXAMPLE 4

### Methyl Cellulose

In this example, hydrated methyl cellulose is obtained by mixing two hundred grams of commercially available methyl cellulose (Methocel A15) with 700 grams of water and 100 grams of propylene glycol at 90-100°C. This mixture is stirred and allowed to cool to ambient temperature prior to use.

## EXAMPLE 5

### Stain

| | Ingredient | % | Gram(s) |
|---|---|---|---|
| 1. | Hydrated hydroxypropyl methyl cellulose (Ex. 3) | 10.0 | 40.0 |
| 2. | Long oil alkyd resin (60% NV) | 5.0 | 20.0 |
| 3. | Extender pigment | 7.0 | 28.0 |
| 4. | Red iron oxide pigment | 5.0 | 20.0 |
| 5. | Mineral spirits | 14.0 | 56.0 |
| 6. | Linseed oil | 6.0 | 24.0 |
| 7. | Anti-skinning agent | 0.25 | 1.0 |
| 8. | Cobalt naphthenate 6% | 0.25 | 1.0 |
| 9. | Manganese naphthenate 6% | 0.20 | 0.8 |
| 10. | Water | 42.1 | 168.4 |

-17-

EXAMPLE 5 (con't)

| | | | |
|---|---|---|---|
| 11. | Acrylic latex resin (65% NV) | 10.0 | 40.0 |
| 12. | Lampblack toner | 0.20 | 0.8 |
| | | 100.00 | 400.0 |

The ingredients are mixed according to the procedure outlined in Example 2. Lampblack toner (12) is added after admixture of all the other ingredients to adjust the final color of the product. Substitution of an equivalent amount of hydrated methyl cellulose (Example 4) for ingredient (1) affords another embodiment of this stain formulation.

EXAMPLE 6

Hydroxypropyl Cellulose

350 Grams of 2-hydroxypropyl cellulose (Methocel E3) are mixed with 150 grams of propylene glycol and 500 grams of water at 90-100°C. The mixture of hydrated hydroxypropyl cellulose is stirred and allowed to cool to ambient temperature.

EXAMPLE 7

Paint

| Ingredient | % w/w |
|---|---|
| Hydrated cellulose ether (Ex. 6) | 10.0 |
| Medium oil alkyl (50% NV) | 7.0 |
| Extender pigment | 5.0 |
| Titanium dioxide | 5.0 |
| Yellow iron oxide | 7.0 |
| Linseed oil | 7.0 |
| Mineral spirits | 15.0 |
| Anti-skinning agent | 0.25 |
| Cobalt naphthenate 6% | 0.25 |
| Calcium naphthenate 8% | 0.20 |
| Water | 31.0 |
| Acrylic latex (65% NV) | 12.0 |
| Bentonite | 0.3 |
| | 100.0 |

# CLAIMS

1.       A liquid coating composition comprising (a) a continuous oil phase comprising a solution of an oil-soluble resin or drying oil or mixture thereof in a water-immiscible solvent, characterized by (b) a discontinuous phase comprising an emulsion with pH of about 4 to 10 of water-insoluble resin in an aqueous medium, and (c) an effective dispersing amount of a dispersing agent for dispersing (b) in (a) consisting essentially of hydrated water-soluble cellulose ether.

2.       A composition according to claim 1, characterized by the fact that said dispersing agent is sodium carboxymethyl cellulose, sodium carboxymethyl 2-hydroxy ethyl cellulose, 2-hydroxy ethyl cellulose, methyl cellulose, 2-hydroxypropyl methyl cellulose, 2-hydroxyethyl methyl cellulose, 2-hydroxybutyl methyl cellulose, 2-hydroxyethyl ethyl cellulose or 2-hydroxypropyl cellulose.

3.       A composition according to claim 1, characterized by the fact that said dispersing agent is methyl cellulose, 2-hydroxypropyl methyl cellulose or 2-hydroxypropyl cellulose.

4.       A composition according to any one of the preceding claims, which has from about 20 to about 95.8 weight percent of (a), from about 4 to about 70 weight percent of (b) and from about 0.2 to about 10 weight percent of (c) based on the dry weight of said cellulose ether.

5.       A composition according to any one of the preceding claims, characterized by the fact that it is a stain.

6.       A composition according to claim 5, characterized by the fact that it is a water-proofing stain.

7.       A composition according to any one of claims 1-4, characterized by the fact that it is a paint.

CASE:   7416-A